# EUROPÄISCHE PATENTSCHRIFT

(11) **EP 4 095 995 B1**
(45) Veröffentlichungstag und Bekanntmachung des Hinweises auf die Patenterteilung: **18.06.2025**
(21) Anmeldenummer: 22174028.5
(22) Anmeldetag: 18.05.2022
(51) Int. Cl.: H01M 50/20, H01M 50/207, H01M 50/244, B65B 5/12, B65B 35/04, B65B 35/54, H01M 50/213

(54) **VORRICHTUNG ZUM BESTÜCKEN VON ZELLHALTERN VON AKKUMULATOREN**
DEVICE FOR FEEDING CELL HOLDERS OF BATTERIES
DISPOSITIF D'ÉQUIPEMENT DES PORTE-CELLULES DES ACCUMULATEURS

(30) Priorität: 27.05.2021 DE 102021113697
(43) Veröffentlichungstag der Anmeldung: 30.11.2022
(73) Patentinhaber: Wilhelm Bahmüller Maschinenbau-Präzisionswerkzeuge GmbH, 73655 Plüderhausen (DE)
(72) Erfinder: Schneider, Jürgen, 71566 Althütte (DE); Carucci, Vito, 73660 Urbach (DE)
(74) Vertreter: DREISS Patentanwälte PartG mbB

(56) Entgegenhaltungen:
- EP-A1- 3 098 884
- WO-A1-2018/223166
- CN-A- 105 858 169
- CN-A- 107 093 761
- CN-A- 108 899 589
- CN-A- 111 824 501
- CN-A- 112 372 288
- CN-A- 112 599 835
- DE-A1- 102013 207 536
- DE-A1- 3 509 802
- US-A1- 2015 052 741
- US-B2- 7 584 589

## Beschreibung

Akkumulatoren (umgangssprachlich auch als "Akkus" bezeichnet) von elektrischen Handwerkzeugen oder anderen Geräten umfassen einige wenige Akkumulatorzellen, die in einen Steckplatz eines Zellhalters eingesteckt werden. Bei solchen relativ kleinen Akkus werden nicht alle Akkumulatorzellen mit der gleichen Ausrichtung in einen Steckplatz des Zellhalters gesteckt. Manche Akkumulatorzellen werden mit ihrem Plus-Pol in einen Steckplatz gesteckt; andere Akkumulatorzellen werden mit ihrem Minus-Pol in einen Steckplatz gesteckt. Die unterschiedlichen Ausrichtungen der Akkumulatorzellen in einem Zellhalter haben oftmals ihre seine Ursache darin, dass diese Akkus unter ergonomischen Gesichtspunkten, nach dem verfügbaren Bauraum und anderen Kriterien gestalten werden.

Das Bestücken solcher Zellhalter kann zum Beispiel mit einem Roboterarm erfolgen, der mit einem Greifer bestückt ist. Diese Art der Bestückung funktioniert, ist aber relativ langsam (das Bestücken eines Steckplatzes dauert deutlich länger als eine Sekunde) und verhältnismäßig teuer und kompliziert in der Anwendung.

Aus der EP 3 098 884 A1 ist eine Halteeinrichtung für Energiespeicher bekannt, wobei in einem ersten Schritt die Energiespeicherkerne und einem zweiten Schritt die Energiespeicherhüllen ausgedrückt und ausgestoßen werden. Demnach werden keine vollständigen Energiespeicher bestückt, sondern verbrauchte Energiespeicher aufgetrennt.

Aus der CN 108 899 589 A ist eine Vorrichtung zum Handhaben von in Reihe angeordneten Batterien bekannt, welche nicht zum Bestücken von einzelnen Batterien geeignet ist.

Der Erfindung liegt die Aufgabe zugrunde eine Vorrichtung zum Bestücken von Zellhaltern mit Akkumulatorzellen verschiedener Polarität bereitzustellen, die einfach im Aufbau, schnell und sehr flexibel ist. Darüber hinaus soll sie kostengünstig sein und zuverlässig arbeiten.

Diese Aufgabe wird erfindungsgemäß gelöst durch eine Vorrichtung zum Bestücken von Zellhaltern mit Akkumulatorzellen umfassend ein erstes Magazin und ein zweites Magazin für Akkumulatorzellen, eine erste Zuführeinrichtung und eine zweite Zuführeinrichtung, und eine Fördereinrichtung zum Stecken einer Akkumulatorzelle in einen Steckplatz eines Zellhalters, wobei die erste Zuführeinrichtung so eingerichtet ist, dass sie der Fördereinrichtung eine Akkumulatorzelle aus dem ersten Magazin zuführen kann, und wobei die zweite Zuführeinrichtung so eingerichtet ist, dass sie der Fördereinrichtung eine Akkumulatorzelle aus dem zweiten Magazin zuführen kann.

Erfindungsgemäß wird die Fördereinrichtung wahlweise von Akkumulatorzellen aus zwei verschiedenen Magazinen versorgt. In dem einen Magazin sind die Akkumulatorzellen zum Beispiel so ausgerichtet, dass sich deren Pluspol oben befindet. In dem zweiten Magazin sind die Akkumulatorzellen zum Beispiel so ausgerichtet, dass sich deren Pluspol unten befindet. Diese Art der Befüllung wird im Zusammenhang mit der Erfindung als polorientierte Befüllung bezeichnet. Gemeint ist damit, dass alle Zellen in einem Magazin gleich ausgerichtet sind.

Dann ist es möglich, durch entsprechendes Ansteuern der ersten bzw. der zweiten Zuführeinrichtung eine Akkumulatorzelle in den Einzugsbereich der Fördereinrichtung zu befördern, deren Pluspol sich oben befindet oder deren Pluspol sich unten befindet. Das Zuführen einer Akkumulatorzelle aus dem ersten Magazin in den Einzugsbereich der Fördereinrichtung geht genauso schnell wie das Zuführen einer Akkumulatorzelle aus dem zweiten Magazin.

Anschließend bewegt die Fördereinrichtung die in ihrem Einzugsbereich befindliche Akkumulatorzelle in den Steckplatz. Die Fördereinrichtung befördert durch eine einfache Linearbewegung eine Akkumulatorzelle aus dem Einzugsbereich der Fördereinrichtung in den entsprechenden Steckplatz des Zellhalters, unabhängig von der Ausrichtung der bzw. der Polarität der Akkumulatorzelle in den betreffenden Steckplatz des Zellhalters.

Diese Vorrichtung ist relativ einfach im Aufbau, sie ist einfach zu handhaben und auch unter dem Aspekt der Arbeitssicherheit sehr vorteilhaft, da, anders als bei einem Roboterarm mit Greifer, die Gefahr von Unfällen oder Kollisionen mit Personen nicht besteht. Die bewegten Teile der Zuführeinrichtungen und der Fördereinrichtung lassen sich gut kapseln, so dass eine Verletzung von Personen in der Nähe der erfindungsgemäßen Vorrichtung ausgeschlossen werden kann. Außerdem arbeitet die Vorrichtung sehr schnell, da nur einfache Linearbewegungen oder Drehbewegungen auszuführen sind, die mit hohen Beschleunigungen bzw. Verzögerungen durchgeführt werden können. Bei Versuchen hat sich ergeben, dass Bestückungszeiten von einer Sekunde oder weniger pro Akkumulatorzelle realisieren lassen. Dabei ist es unerheblich, wie die Akkumulatorzellen ausgerichtet sind. Im Ergebnis stellt die erfindungsgemäße Vorrichtung eine einfache, kompakt bauende und zuverlässige Vorrichtung zum Bestücken von Zellhaltern dar.

Eine vorteilhafte Ausgestaltung der ersten bzw. der zweiten Zuführeinrichtung sieht einen Schieber sowie einen steuerbaren Linearantrieb für den Schieber vor, wobei der Schieber und der Linearantrieb so ausgerichtet und angeordnet sind, dass der Schieber eine Akkumulatorzelle, die sich am Ausgang des ersten Magazins befindet, in einen Einzugsbereich der Fördereinrichtung bewegt, wenn der Linearantrieb entsprechend angesteuert wird. Entsprechendes gilt für die zweite Zuführeinrichtung, die eine Akkumulatorzelle von einem Ausgang des zweiten Magazins in den Einzugsbereich der Fördereinrichtung bewegen kann.

Vereinfacht gesagt, schiebt der Schieber der ersten Zuführeinrichtung eine Akkumulatorzelle, die sich am Ausgang des ersten Magazins befindet, durch eine Linearbewegung in den Einzugsbereich der Fördereinrichtung. Diese Bewegung erfordert nur wenig Kraft und Zeit. Sie technisch sehr einfach realisierbar, beispielsweise mit Hilfe eines Pneumatikzylinders, an dessen Kolbenstange der Schieber angeordnet ist. Solche Pneumatikzylinder sind sehr leistungsfähig, schnell und zuverlässig.

In einer alternativen Ausführungsform umfasst die erste Zuführeinrichtung eine drehbar gelagerte Transportwalze mit mindestens einer Auskehlung zur Aufnahme einer Akkumulatorzelle, wobei eine Längsachse der Auskehlung parallel zu einer Drehachse der Transportwalze verläuft, wobei die mindestens eine Auskehlung mittels des Drehantriebs von einem Ausgang des ersten Magazins in den Einzugsbereich der Fördereinrichtung bewegbar ist.

Entsprechendes gilt auch für die zweite Fördereinrichtung. Sie ist prinzipiell gleich aufgebaut wie die erste Fördereinrichtung. Allerdings befördert die Auskehlung der Transportwalze der zweiten Zuführeinrichtung eine Akkumulatorzelle vom Ausgang des zweiten Magazins in den Einzugsbereich der Fördereinrichtung.

Mit Hilfe der Transportwalze kann beispielsweise durch eine Drehung der Transportwalze von nur 90° eine Akkumulatorzelle, die sich in dem Ausgangsbereich des ersten Magazins befindet, in den Einzugsbereich der Fördereinrichtung bewegt werden. Entsprechendes gilt auch für die Transportwalze der zweiten Zuführeinrichtung. Eine solche Drehbewegung kann in einem Bruchteil einer Sekunde durchgeführt werden. Das Zuführen einer Akkumulatorzelle mit der gewünschten Ausrichtung des Pluspols (oben oder unten) in den Einzugsbereich der Fördereinrichtung kann in sehr kurzer Zeit erfolgen kann.

Sobald sich die Akkumulatorzelle im Einzugsbereich der Fördereinrichtung befindet, kann diese aktiviert werden und die dort befindliche Akkumulatorzelle in den Steckplatz des Zellhalters gesteckt bzw. gefördert werden. Auch dieser Vorgang dauert nur einen Bruchteil einer Sekunde, so dass insgesamt der Prozess des Steckens einer Akkumulatorzelle in einen Steckplatz des Zellhalters in einer Sekunde oder sogar noch schneller erfolgen kann.

Sobald ein Steckplatz des Zellhalters mit einer Akkumulatorzelle besetzt ist, wird der Zellhalter relativ zu der Fördereinrichtung um einen Steckplatz weiterbewegt. Gleichzeitig wird aus dem ersten oder dem zweiten Magazin eine Akkumulatorzelle mit der für den nächsten zu belegenden Steckplatz erforderlichen Ausrichtung in den Einzugsbereich der Fördereinrichtung bewegt. Die erforderliche Ausrichtung der Akkumulatorzelle entscheidet, ob eine Akkumulatorzelle aus dem ersten oder dem zweiten Magazin in den Einzugsbereich der Fördereinrichtung transportiert wird.

Diese Vorgänge können zeitlich versetzt oder simultan erfolgen. Sobald sich eine weitere Akkumulatorzelle im Einzugsbereich der Fördereinrichtung befindet und der Zellhalter entsprechend positioniert ist, kann der nächste Steckplatz mit dieser Akkumulatorzelle bestückt werden.

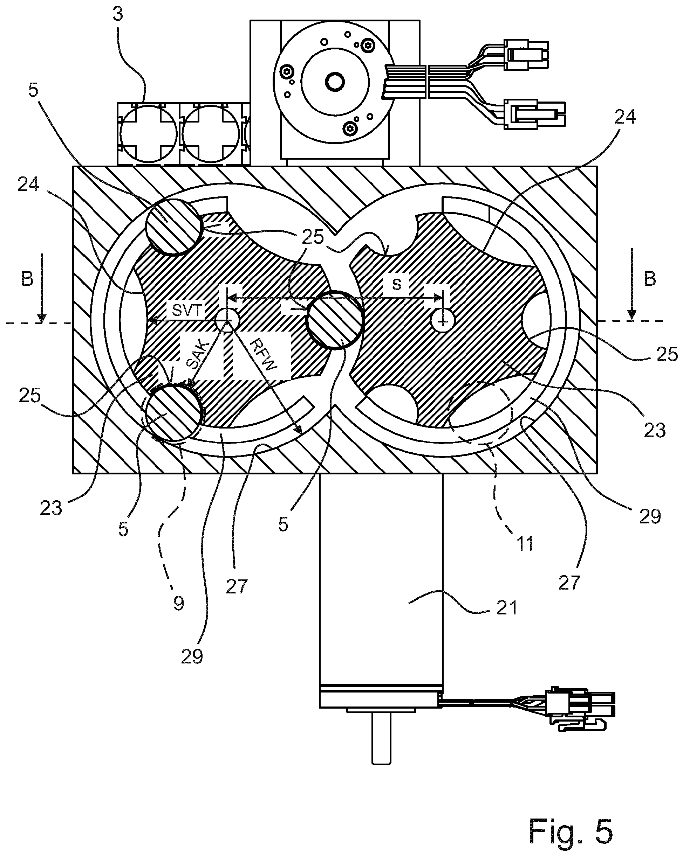

Die Geometrien des Abstandes der Drehachsen beider Transportwalzen in Abhängigkeit der Größe der Auskehlung und dem Durchmesser der Akkumulatorzellen sind im Anspruch 4 beansprucht. Diese geometrische Relation wird nachfolgend im Zusammenhang mit der Beschreibung der Figur 5 deutlich. Kurz gesagt, wird dadurch eine optimale Sicherung der Akkumulatorzellen gegen Kippen bei gleichzeitig geringem Bauraumbedarf und einer minimalen Zahl von Bauteilen erreicht.

Um zu verhindern, dass eine in einer Auskehlung der Transportwalze befindliche Akkumulatorzelle bei der Drehbewegung der Transportwalze aus der Auskehlung herausfällt, ist in weiterer vorteilhafter Ausgestaltung eine kreisbogenförmig gekrümmte Führungswand vorgesehen, welche mindestens einen Teil der Transportwalze umgibt und konzentrisch zu der Drehachse der Transportwalze angeordnet ist. Dadurch ist ein formschlüssiger Transport der Akkumulatorzelle in der Auskehlung gewährleistet und es ist sichergestellt, dass die Akkumulatorzelle während des Transports in den Einzugsbereich der Fördereinrichtung nicht aus der Auskehlung herausfällt.

Der Abstand der Führungswand von der Drehachse der Transportwalze ist im Anspruch 6 beansprucht. Auch diese geometrische Relation wird anhand der Figur 5 und deren Beschreibung erläutert.

Ein Ausführungsbeispiel einer Fördereinrichtung sieht vor, dass die Fördereinrichtung ein drehantreibbares Förderrad aufweist. Dieses Förderrad ragt mit seinem Außendurchmesser in den Einzugsbereich der Fördereinrichtung. Wenn also von einer der Zuführeinrichtungen eine Akkumulatorzelle in den Einzugsbereich transportiert wird, dann liegt der Außendurchmesser des Förderrads an der zylindrischen Außenkontur der Akkumulatorzelle an. Wenn nun das Förderrad angetrieben wird, dann befördert es durch einen Reibschluss mit der Akkumulatorzelle diese (durch einen optionalen Förderschacht) in Richtung des Zellhalters.

Daher ist es vorteilhaft, wenn das Förderrad aus einem elastischen und griffigen Material, wie z. B. Gummi oder einem Kunststoff mit hohem Haftreibungs-Beiwert besteht.

Damit die Akkumulatorzelle nicht "nach hinten" ausweichen kann, wenn das Förderrad von "vorne" auf die Außenkontur der Akkumulatorzelle drückt, ist auf der dem Förderrad entgegengesetzten Seite ein Widerlager vorgesehen. Dieses Widerlager kann beispielsweise eine zweite drehbar gelagerte Rolle sein, die entweder nur leer mitläuft oder ebenfalls drehantreibbar ist. Wenn die Rolle drehantriebbar ist, kann die Antriebsleistung und die Kraft, welche die Fördereinrichtung auf die Akkumulatorzelle ausübt, erhöht werden. Dadurch können höhere Beschleunigungen und größere Kräfte beim Bestücken des Tellhalters realisiert werden. Dadurch wird unter anderem die Zeit für das Fördern einer Akkumulatorzelle aus dem Einzugsbereich in den Steckplatz eines Zellhalters nochmals verkürzt.

Alternativ ist es aber auch möglich, das Widerlager beispielsweise als eine feststehende Rippe auszubilden, die parallel zu der Förderrichtung des Förderrads verläuft. Dann stützt dieses Widerlager die Akkumulatorzelle und verhindert so ein Ausweichen der Akkumulatorzelle "nach hinten". In diesem Fall sollte die Rippe aus einem Material bestehen, das eine niedrigen Haftreibungs-Beiwert hat.

In einer alternativen Ausgestaltung ist es auch möglich, dass die Fördereinrichtung einen Stempel und einen Linearantrieb umfasst, wobei der Stempel oberhalb des Einzugsbereichs der Fördereinrichtung angeordnet ist und durch Ausfahren des Stempels der Stempel eine im Einzugsbereich befindliche Akkumulatorzelle (durch einen optionalen Förderschacht) in den Steckplatz des Zellhalters befördert, der sich in Förderrichtung gesehen, hinter dem Förderschacht befindet. Auch hier kann ohne Weiteres ein Pneumatikzylinder als Linearantrieb eingesetzt werden und am Ende an der Kolbenstange des Pneumatikzylinders ein Stempel, beispielsweise in Form eines Gummiknopfs, angebracht werden.

Damit die von der Fördereinrichtung geförderten Akkumulatorzellen nicht umfallen können, bevor sie mit ihrem in Förderrichtung vorderen Ende in den vorgesehenen Steckplatz des Zellhalters gedrückt werden, sieht die Fördereinrichtung in weiterer vorteilhafter Ausgestaltung eine drehbare Halbschale vor.

Diese Halbschale wird immer so gedreht, dass ein Herausfallen oder Kippen der aus dem Förderschacht geförderten Akkumulatorzellen verhindert wird. Wenn also beispielsweise an zwei oder drei Seiten des Steckplatzes, der bestückt werden soll, die benachbarten Steckplätze bereits mit Akkumulatorzelle n bestückt worden sind, kann die von der Fördereinrichtung geförderte Akkumulatorzelle nicht in diese Richtungen kippen. Dann wird die Halbschale so gedreht, dass sie den noch offenen Bereich des Zellhalters, dort wo noch keine Akkumulatorzellen gesteckt sind, abdeckt. Damit wird ein Kippen der von der Fördereinrichtung bewegten Akkumulatorzelle auch in diese Richtung verhindert.

Um jederzeit eine optimale Ausrichtung der Halbschale zu gewährleisten, sieht die Fördereinrichtung einen steuerbaren Drehantrieb für die Halbschale vor.

Des Weiteren ist vorgesehen, dass, in Förderrichtung gesehen, hinter dem Einzugsbereich, bzw. dem optionalen Förderschacht ein verfahrbarer Schlitten vorhanden ist. Dieser verfahrbare Schlitten trägt den Zellhalter und verfährt den Zellhalter so, dass sich immer der nächste zu bestückende Steckplatz des Zellhalters hinter dem Einzugsbereich, bzw. dem optionalen Förderschacht befindet. Dann findet die durch den Förderschacht geförderte Akkumulatorzelle "von alleine" den ihr zugedachten Steckplatz. Sobald sie dort angekommen ist, wird sie in dem Steckplatz mit einem leichten Presssitz gehalten.

Es ist möglich, zwei Linearantriebe, die orthogonal zueinander ausgerichtet sind, zur Steuerung bzw. Positionierung des Schlittens und damit auch des Zellhalters vorzusehen. Diese Antriebe können als Servomotoren oder Schrittmotoren ausgebildet sein. Servomotoren oder Schrittmotoren erlauben eine ausreichend genaue Positionierung des Zellhalters bzw. des Schlittens relativ zu dem Förderschacht, so dass die aus dem Förderschacht austretenden Akkumulatorzellen immer den ihnen zugedachten Steckplatz finden.

Die Antriebe, seien es die Linearantriebe oder Drehantriebe der Zuführeinrichtungen, der Fördereinrichtung, der drehbaren Halbschale und/oder des Schlittens, können pneumatisch, elektromechanisch oder hydraulische Antriebe sein.

In weiterer vorteilhafter Ausgestaltung der Erfindung ist das erste Magazin und/oder das zweite Magazin als Rohr oder Schlauch ausgebildet, dessen Innendurchmesser etwas größer als der Außendurchmesser der Akkumulatorzellen ist. In diesem Fall werden in dem ersten Magazin Akkumulatorzellen hintereinander und mit der gleichen Ausrichtung gestapelt, so dass zum Beispiel deren Pluspole nach oben zeigen.

In dem entsprechenden zweiten Magazin werden lauter Akkumulatorzellen hintereinander und mit der gleichen Ausrichtung gestapelt, deren Pluspol nach unten zeigt. Dadurch ist es sichergestellt, dass immer eine Akkumulatorzelle der gewünschten Ausrichtung (Pluspol nach oben oder Pluspol nach unten) je nach Bedarf in den Einzugsbereich der Fördereinrichtung gefördert werden kann. Dies geschieht durch ein einfaches Ansteuern entweder der ersten Zuführeinrichtung oder der zweiten Zuführeinrichtung.

Bei dieser Ausführungsform ist das erste Magazin bzw. das zweite Magazin in der Regel in vertikaler Richtung aufgestellt. Dann fällt mit Hilfe der Schwerkraft immer dann, wenn eine Akkumulatorzelle mittels der entsprechenden Zuführeinrichtung vom Ausgang des Magazins wegtransportiert wurde, die nächste Akkumulatorzelle aus dem Magazin in den Ausgang des Magazins und steht für den Transport in den Einzugsbereich der Fördereinrichtung zur Verfügung.

In alternativer Ausgestaltung der Erfindung ist es auch möglich, dass das Magazin in der Art eines Rohrs oder Schlauchs mit rechteckigem Querschnitt ausgebildet ist. Dabei ist eine Höhe des Magazins etwas größer als eine Länge der Akkumulatorzellen und eine Breite des Magazins ist etwas größer als der Durchmesser der Akkumulatorzellen. In diesem Fall sind die Magazine in der Regel horizontal ausgerichtet. Sie werden ebenfalls so mit Akkumulatorzellen bestückt, dass alle Zellen in einem Magazin die gleiche Polorientierung aufweisen.

Man kann auch sagen, dass gleich ausgerichtete Akkumulatorzellen nebeneinander in das Magazin gestellt werden. Durch Schieben, beispielsweise mit einem Stempel oder Schieber, kann immer eine Akkumulatorzelle an den Ausgang des Magazins gefördert werden und von dort mit Hilfe der ersten bzw. der zweiten Zuführeinrichtung, in den Einzugsbereich der Fördereinrichtung bewegt werden.

Die Vorteile der Erfindung werden ebenfalls realisiert durch ein Verfahren zum Bestücken eines Zellhalters, wobei dieses Verfahren mit einer Vorrichtung, umfassend ein erstes Magazin und ein zweites Magazin für Akkumulatorzellen, eine erste Zuführeinrichtung und eine zweite Zuführeinrichtung sowie ein Fördereinrichtung zum Stecken einer Akkumulatorzelle in einen Steckplatz eines Zellhalters voraussetzt, wobei die erste Zuführeinrichtung so eingerichtet ist, dass sie eine Akkumulatorzelle aus dem ersten Magazin einem Einzugsbereich der Fördereinrichtung zuführen kann, wobei die zweite Zuführeinrichtung so eingerichtet ist, dass sie eine Akkumulatorzelle aus dem zweiten Magazin dem Einzugsbereich der Fördereinrichtung zuführen kann, und wobei die Fördereinrichtung eine in dem Einzugsbereich befindliche Akkumulatorzelle (durch einen optionalen Förderschacht) in einen freien Steckplatz eines Zellhalters fördern kann.

Dieses Verfahren ist sehr einfach und schnell, da es lediglich wenige Linear- oder Drehbewegungen der Zuführeinrichtung bzw. der Fördereinrichtung erfordert. Entsprechendes gilt auch für das Positionieren des Zellhalters. Das Zuführen einer Akkumulatorzelle von einem Ausgang des ersten Magazins oder des zweiten Magazins und das Positionieren des Zellhalters können simultan erfolgen, was die Steckzeit weiter verkürzen hilft.

Die Vorteile des erfindungsgemäßen Verfahrens sind besonders groß, wenn die in dem ersten Magazin und in dem zweiten Magazin befindlichen Akkumulatorzellen jeweils gleich ausgerichtet sind, aber die Ausrichtung der in dem ersten Magazin und dem zweiten Magazin zwischengelagerten Akkumulatorzellen verschieden ist. Das heißt, einmal kann beispielsweise der Pluspol der Akkumulatorzellen oben sein und in dem anderen Magazin ist der Pluspol der Akkumulatorzellen unten angeordnet.

Weitere Vorteile und vorteilhafte Ausgestaltungen der Erfindung sind der nachfolgenden Zeichnung, deren Beschreibung und den Patentansprüchen entnehmbar. Zeichnung Es zeigen:
- Figur 1: eine Isometrie eines ersten Ausführungsbeispiels einer erfindungsgemäßen Vorrichtung;
- Figur 2: einen Schnitt in Richtung der Linie A-A durch die Vorrichtung gemäß Figur 1;
- Figur 3: einen Schnitt durch die Vorrichtung entlang der Linie B-B;
- Figur 4: eine Isometrie eines zweiten Ausführungsbeispiels einer erfindungsgemäßen Vorrichtung;
- Figur 5: einen Horizontalschnitt durch die Vorrichtung gemäß Figur 4 entlang der Linie A-A;
- Figur 6: einen Vertikalschnitt durch die Vorrichtung gemäß Figur 4;
- Figur 7: eine Isometrie eines dritten Ausführungsbeispiels einer erfindungsgemäßen Vorrichtung;
- Figur 8: einen Vertikalschnitt entlang der Linie A-A; und
- Figur 9: einen Horizontalschnitt durch die Vorrichtung entlang der Linie B-B.

### Beschreibung der Ausführungsbeispiele

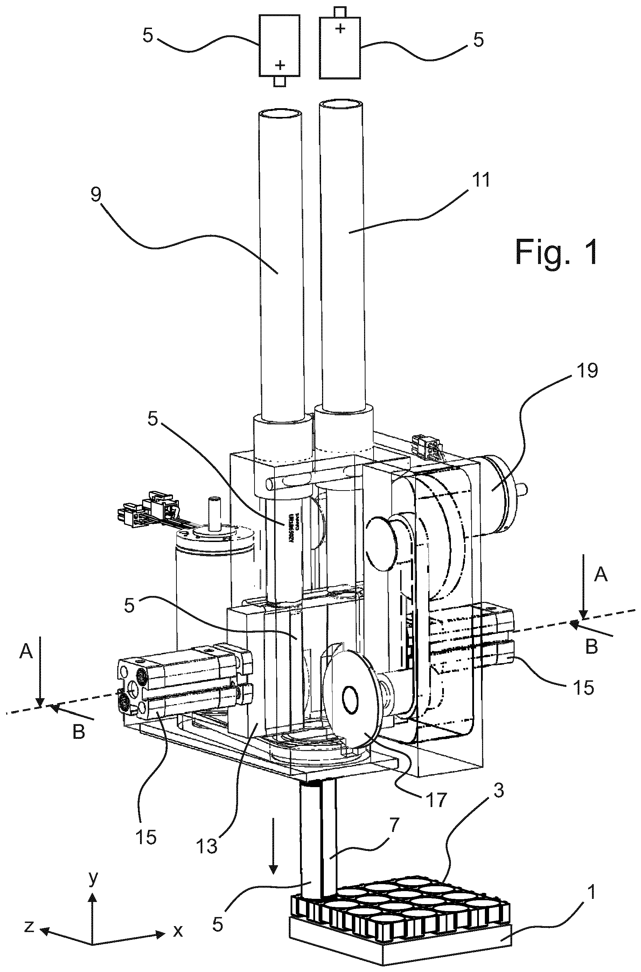

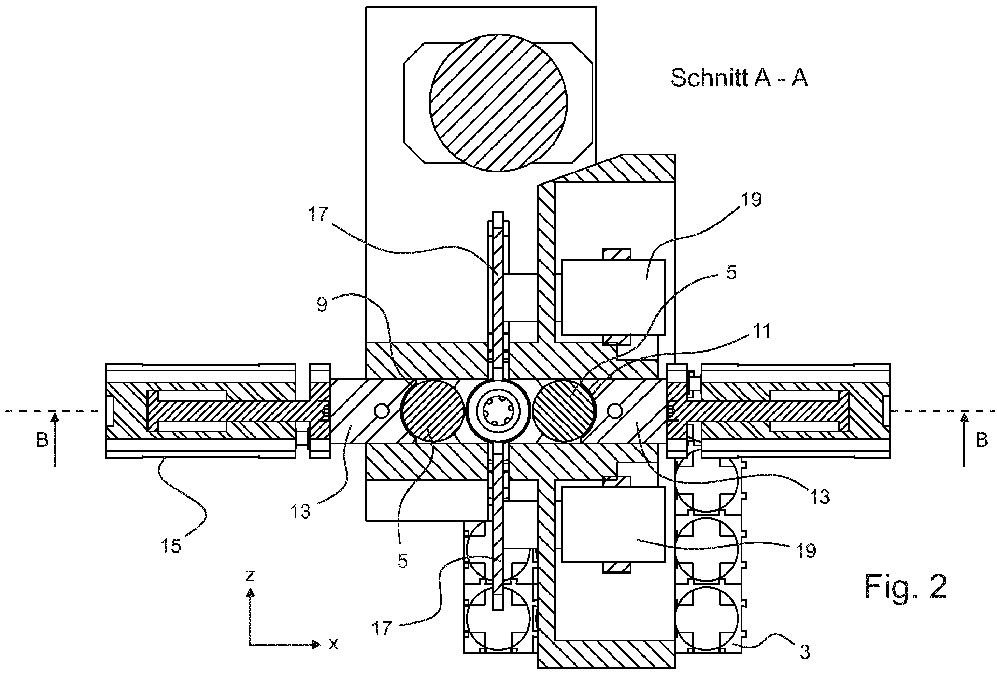

In den Figur 1 bis 3 ist ein erstes Ausführungsbeispiel einer erfindungsgemäßen Vorrichtung dargestellt. In den meisten Figuren ist ein kartesisches Koordinatensystem eingetragen, um die verschiedenen Raumes- und Bewegungsrichtungen kennzeichnen zu können. Aus der Zusammenschau der Figuren 1 bis 3 sind die einzelnen Bauteile und deren gegenseitige Zuordnung zu erkennen.

Die Beschreibung beginnt am unteren Ende der Vorrichtung und endet an deren oberen Teil und damit in entgegengesetzter Richtung zu der Bewegung der Akkumulatorzellen 5 durch die Vorrichtung.

Der unterste Teil der erfindungsgemäßen Vorrichtung ist ein Schlitten 1, der einen Zellhalter 3 trägt. Der Schlitten 1 ist in Richtung der X-Achse, der Y-Achse und/oder der Z-Achse durch nicht dargestellte Linearantriebe verfahrbar.

Alternativ kann auch der obere Teil der Vorrichtung relativ zu dem Schlitten 1 verfahren werden. Auch "Mischformen" sind möglich, die darin bestehen, dass eine oder zwei Bewegungsachsen dem Schlitten 1 zugeordnet sind und zwei oder eine Bewegungsachse dem oberen Teil der Vorrichtung zugeordnet ist. Die in Figur 1 dargestellte Ausführungsform kommt auch mit nur zwei Bewegungsachsen aus.

Die Relativbewegungen zwischen dem Schlitten 1 und dem oberen Teil der Vorrichtung kann mit Hilfe von geeigneten Führungen und Linearantrieben (nicht dargestellt) realisiert werden.

Der Schlitten 1 und mit ihm der Zellhalter 3 wird immer so unter einer im oberen Teil der Vorrichtung angeordneten Fördereinrichtung positioniert, dass sich ein freier Steckplatz des Zellhalters 3 unterhalb eines optionalen Förderschachts (nicht sichtbar in der Figur 1) befindet.

In der Figur 1 ist eine Akkumulatorzelle 5 dargestellt, die in einen Steckplatz links oben in dem Zellhalter 3 eingesteckt ist. Dies geschieht dadurch, dass die Akkumulatorzelle 5 in der durch einen Pfeil angedeuteten Förderrichtung (in Richtung der negativen Y-Achse) aus der Fördereinrichtung der erfindungsgemäßen Vorrichtung nach unten gefördert wird, bis das untere Ende der Akkumulatorzelle 5 in den bis dahin freien Steckplatz des Zellhalters 3 gedrückt wird. Die Akkumulatorzelle sitzt dann mit einem leichten Presssitz in dem Steckplatz und ist dadurch fixiert und gegen Kippen gesichert.

Damit die Akkumulatorzelle 5 beim Bestücken nicht kippen kann, ist eine (optionale) drehantreibbare Halbschale 7 vorgesehen, die immer so um ihre Längsachse gedreht wird, dass sie ein Kippen der Akkumulatorzelle 5 verhindert. In der in Figur 1 dargestellten Position sollte auf der der Halbschale 7 gegenüberliegenden Seite der Akkumulatorzelle 5 eine Stützwand oder ein anderes Widerlager vorgesehen sein. Dieses Widerlager ist ebenso wie die Führungen und Linearantriebe aus Gründen der Übersichtlichkeit in der Figur 1 nicht dargestellt.

Wenn der erste Steckplatz des Zellhalters 3 belegt ist (wie in der Figur 1 dargestellt), dann wird der Schlitten 1 so angesteuert, dass er sich um einen Steckplatz weiterbewegt. Beispielsweise in Richtung der negativen Z-Achse oder in Richtung der negativen X-Achse. Dann befindet sich wieder ein freier Steckplatz unterhalb der erfindungsgemäßen Fördereinrichtung. Die drehbare Halbschale 7 macht die Vorschubbewegung des Schlittens 1 nicht mit; sie behält ihre Position bei. Es ist offensichtlich, dass der gleiche Effekt auch erzielt werden kann, wenn der Schlitte 1 feststeht und der obere Teil der Vorrichtung sich relativ zu dem Schlitten bewegt.

Wie bereits erläutert, wird nach dem Bestücken des ersten Steckplatzes der Schlitten 1 in Richtung der negativen Z-Achse so weit bewegt, dass sich der nächste freie Steckplatz unterhalb der Fördereinrichtung befindet. Dann verhindert die in dem ersten Steckplatz vorhandene Akkumulatorzelle ein kippen der "nächsten" Akkumulatorzelle in diese Richtung. Durch geeignetes Drehen Halbschale 7 kann auch das Kippen der Akkumulatorzelle in die anderen Richtungen verhindert werden. Diese Situation ist in der Figur 1 nicht dargestellt. Auf diese Weise werden nacheinander alle Steckplätze des Zellhalters 3 mit Akkumulatorzellen 5 bestückt.

Nachfolgend werden der Transport der Akkumulatorzellen 5 von einem ersten Magazin 9 bzw. einem zweiten Magazin 11 in einen Einzugsbereich der Fördereinrichtung und der daran anschließende Transport der Akkumulatorzellen 5 zu einem Steckplatz des Zellhalters 3 beschrieben.

Bei dem in Figur 1 dargestellten Ausführungsbeispiel ist das erste Magazin 9 bzw. das zweite Magazin 11 ein flexibler Schlauch oder ein Rohr, dessen Innendurchmesser so auf den Außendurchmesser einer Akkumulatorzelle 5 abgestimmt ist, dass die Akkumulatorzellen 5 mit etwas Spiel in dem Magazin 9, 11 gestapelt werden können. In der Figur 1 ist jeweils nur eine Akkumulatorzelle 5 in den Magazinen 9 bzw. 11 angedeutet. Bei den Akkumulatorzellen 5 im ersten Magazin 9 ist der Pluspol der Akkumulatorzelle oben angeordnet. Bei den Akkumulatorzellen 5 in dem zweiten Magazin 11 ist der Pluspol der Akkumulatorzellen 5 unten angeordnet. Alle Akkumulatorzellen in dem ersten Magazin bzw. dem zweiten Magazin 11 sind gleichgerichtet. Das ist die bereits erwähnte polorientierte Befüllung der Magazine 9, 11.

Die Magazine 9 und 11 sind bei diesem Ausführungsbeispiel vertikal angeordnet. D. h. die Schwerkraft sorgt dafür, dass immer wieder eine Akkumulatorzelle 5 an den Ausgang des ersten Magazins 9 bzw. des zweiten Magazins 11 gelangt, sobald eine Akkumulatorzelle 5 aus einem der Magazine 9, 11 entnommen wurde.

Der Ausgang des ersten Magazins 9 ist in der Figur 1 sichtbar. Er ist der freie Raum unterhalb des unteren Endes des ersten Magazins 9. In entsprechender Weise ist auch der Ausgang des zweiten Magazins 11 unterhalb des zweiten Magazins 11 ausgebildet und angeordnet.

In der Figur 1 sind links von dem Ausgang des ersten Magazins 9 ein Schieber 13 und ein Linearantrieb 15 vorgesehen. Der Schieber 13 und der Linearantrieb 15 bilden eine erste Zuführeinrichtung. Wenn der Linearantrieb 15 betätigt wird, dann bewegt er den Schieber 13 in Richtung der positiven X-Achse, bis der Schieber 13 eine Akkumulatorzelle 5 von dem Ausgang des ersten Magazins 9 in einen Einzugsbereich der Fördereinrichtung befördert hat.

Eine spiegelsymmetrische Anordnung befindet sich auf der rechten Seite des Magazins 11.

Die Fördereinrichtung besteht in dem dargestellten Ausführungsbeispiel aus einem drehantreibbaren Förderrad 17 auf jeder Seite der im Einzugsbereich befindlichen Akkumulatorzelle 5. Der Antrieb der Förderräder 17 kann beispielsweise über einen Elektromotor 19 erfolgen. Das Förderrad 17 ist bevorzugt aus Gummi oder einem anderen elastischen Material mit einem großen Haftreibungskoeffizienten gefertigt, damit eine guter Reibschluss zwischen den Förderrädern 17 und der Akkumulatorzelle 5 entsteht.

Auf der Gegenseite des in Figur 1 sichtbaren Förderrads 17 befindet sich ein Widerlager (nicht sichtbar in der Figur 1). Dieses Widerlager ist bei dem ersten Ausführungsbeispiel ein zweites Förderrad 17, das ebenfalls drehantreibbar ist. Es kann auch nur mitlaufen (ohne eigenen Antrieb). Es ist auch möglich, das Widerlager als feststehende Rippe auszubilden, deren Längsrichtung parallel zu der Y-Achse verläuft.

Das Widerlager verhindert ein Ausweichen der Akkumulatorzelle 5 (nach "hinten"), wenn das Förderrad 17 gegen die zylindrische Außenkontur der Akkumulatorzelle 5 drückt. Eine gewisse Anpresskraft zwischen dem antreibaren Förderrad 17 und der Akkumulatorzelle 5 ist erforderlich, um die zum Fördern und Fixieren der Akkumulatorzelle 5 und den ihr zugedachten Steckplatz des Zellhalters 3 erforderliche Kraft reibschlüssig von dem Förderrad 17 auf die Akkumulatorzelle 5 zu übertragen.

Wenn der Drehantrieb bzw. der Elektromotor 19 aktiviert wird, überträgt er seine Drehbewegung (hier über ein Getriebe und einen Flach- oder Zahnriemen) auf das Förderrad 17, so dass dieses sich im Gegenuhrzeigersinn dreht und somit die Akkumulatorzelle 5 aus dem Einzugsbereich der Fördereinrichtung in der Förderrichtung (d. h. nach unten in der Figur 1) durch einen optionalen Förderschacht) in Richtung des Steckplatzes bzw. des Zellhalters 3 bewegt.

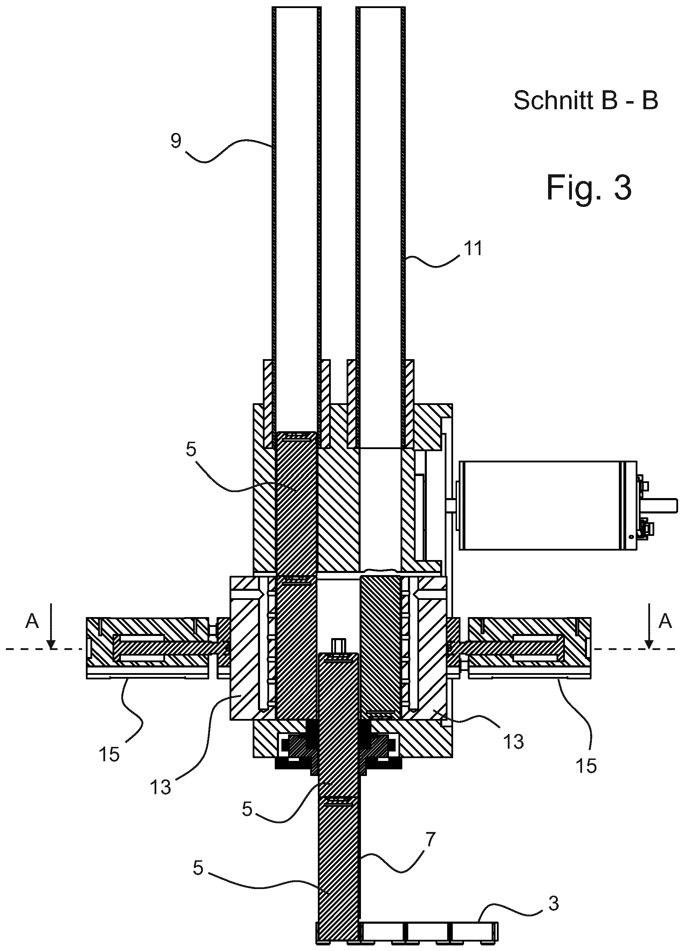

Der Förderschacht ist in der Figur 3 gut zu erkennen. Er bezeichnet den Abschnitt zwischen dem Einzugsbereich der Fördereinrichtung und der drehbaren Halbschale 7. In der Figur 3 befindet sich eine Akkumulatorzelle 5 in dem Förderschacht.

Das optionale drehantreibbare Förderrad 17 auf der gegenüberliegenden Seite der Akkumulatorzelle 5 dreht sich in die entgegengesetzte Richtung, so dass sich die Antriebskräfte beider Förderräder addieren.

Eine Alternative Fördereinrichtung besteht aus einem Stempel und einem Linearantrieb, die zwischen dem ersten Magazin 9 und dem zweiten Magazin 11 und oberhalb des Einzugsbereichs ein angeordnet sind (nicht dargestellt). Die Bewegungsrichtung des Stempels ist koaxial zu der zu der Längsachse der Akkumulatorzelle 5 im Einzugsbereich der Fördereinrichtung.

Wenn dieser Linearantrieb angesteuert wird, dann drückt er eine sich im Einzugsbereich der Fördereinrichtung vorhandene Akkumulatorzelle 5 nach unten (durch den optionalen) Förderschacht bis in einen freien Steckplatz des Zellhalters 3.

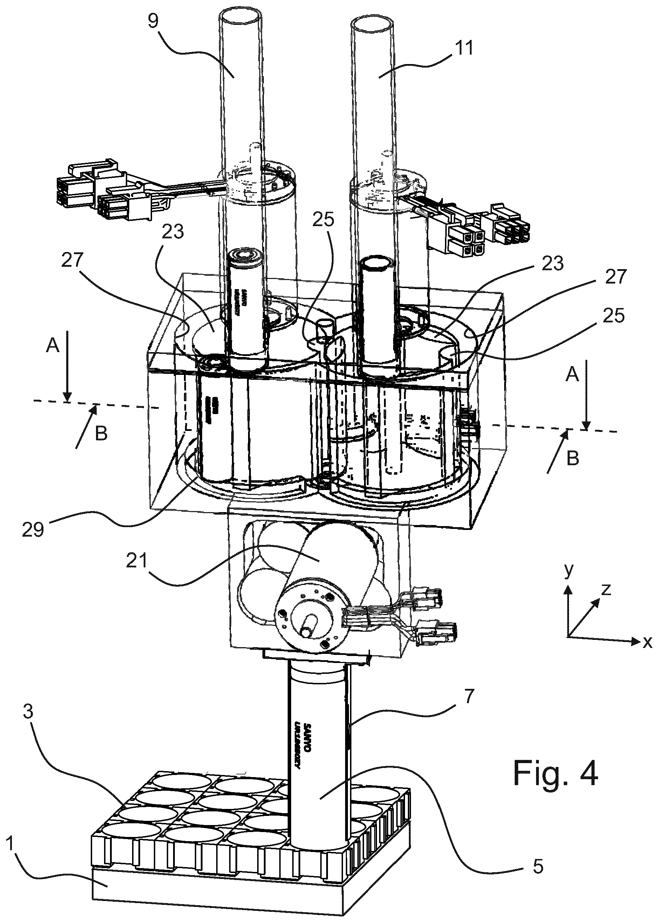

In den Figuren 4 bis 6 ist ein zweites Ausführungsbeispiel einer erfindungsgemäßen Vorrichtung dargestellt. Viele Baugruppen sind ähnlich aufgebaut wie beim ersten Ausführungsbeispiel; sie haben die gleichen Bezugszeichen und es gilt das bezüglich der Figuren 1 bis 3 Gesagte entsprechend.

In der Figur 4 ist die Perspektive etwas anders als bei der Figur 1. Die Figur 4 zeigt die Fördereinrichtung gewissermaßen "von hinten", so dass ein Dreh- oder Schwenkantrieb 21 für die drehbare Halbschale 7 sichtbar wird. Die Halbschale 7 wird in der Figur 4 größtenteils von einer Akkumulatorzelle 5 verdeckt. Über ein nicht im Detail dargestelltes Umlenkgetriebe kann der Antrieb 21 die Halbschale 7 um eine Drehachse drehen. Die Drehachse der Halbschale verläuft koaxial zu der Längsachse der Akkumulatorzelle 5, die von der Halbschale 7 gegen Kippen gesichert werden soll.

In der Figur 4 sind die Steckplätze des Zellhalters 3 gut zu erkennen. Sie sind in Reihen und Spalten angeordnet. In jeden Steckplatz wird eine Akkumulatorzelle 5 eingesteckt. Dabei bewegt der Schlitten 1 den Zellhalter 3 so in Richtung der X- und der Z-Achse, dass sich ein freier Steckplatz unterhalb des Förderschachts der Fördereinrichtung bzw. koaxial und konzentrisch zu der Halbschale 7 befindet. Wie bereits erläutert kommt es auf die Relativbewegung von Schlitten 1, bzw. Zellhalter 3 und dem oberen Teil der Vorrichtung an.

Dann wird dieser freie Steckplatz bestückt, indem eine Akkumulatorzelle 5 vom Einzugsbereich mittels der Fördereinrichtung in den freien Steckplatz des Zellhalters 3 befördert wird.

Bei diesem Ausführungsbeispiel sind das erste Magazin und das zweite Magazin ebenfalls als Schlauch oder Rohr angeordnet, die parallel zueinander verlaufen und vertikal ausgerichtet sind.

Die Zuführeinrichtungen sind bei diesem Ausführungsbeispiel anders ausgebildet als bei dem ersten Ausführungsbeispiel. Bei diesem Ausführungsbeispiel erfindungsgemäßer Zuführeinrichtungen besteht ein Grundgedanke darin, dass jede der Zuführeinrichtungen eine drehantriebbare Transportwalze 23 mit mindestens einer Auskehlung 25 aufweist. Die Transportbewegung wird durch Drehen der Transportwalzen erreicht.

Umgeben sind die Transportwalzen 23 jeweils von einer Führungswand 27, Die Führungswände 27 sind gekrümmt und konzentrisch zur Drehachse der Transportwalzen 23 angeordnet.

Das Prinzip dieser Zuführeinrichtungen ist sehr einfach: Wenn sich eine Auskehlung 25 direkt unter einem der Magazine 9, 11 befindet, dann fällt eine Akkumulatorzelle 5 aufgrund der Schwerkraft von dem Magazin 9 in den Ausgang des Magazins 9, bzw. 11. Die Auskehlung 25 umgibt den Ausgang des Magazins 9, bzw. 11, so dass eine Akkumulatorzelle 5 in die Auskehlung 25 der Transportwalze fällt.

Unterhalb der Transportwalze ist ein bogenförmig gekrümmter Anschlag 29 vorgesehen, der dafür sorgt, dass die Akkumulatorzelle 5 nicht durch die Auskehlung 25 der Transportwalze 23 "hindurchfällt". Der Anschlag 29 ist ortsfest, d.h. er dreht sich nicht mit der Transportwalze 23 mit. Er endet vor dem Einzugsbereich der Fördereinrichtung.

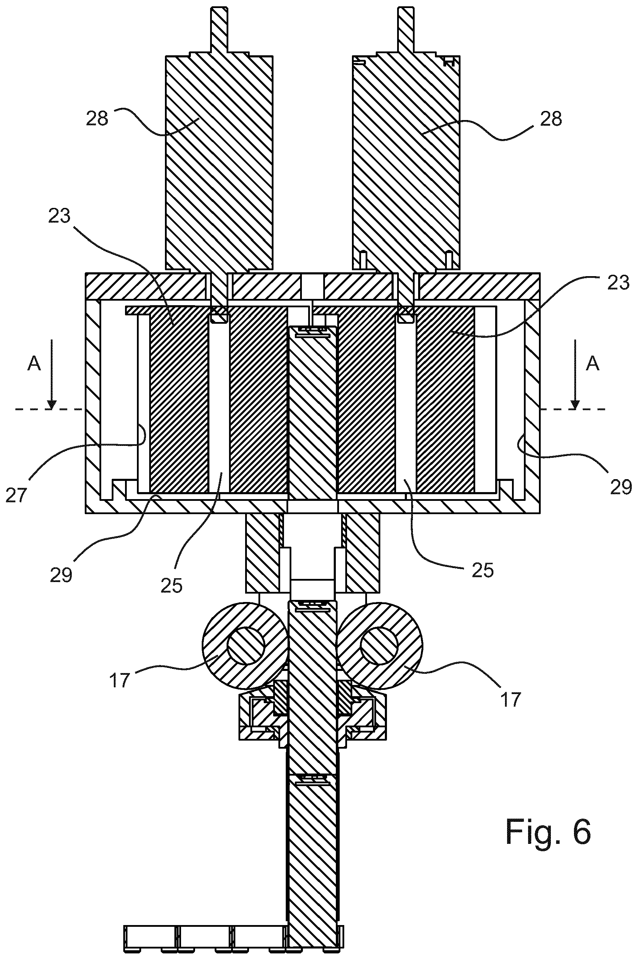

Wenn nun beispielsweise aus dem ersten Magazin 9 eine Akkumulatorzelle 5 in den Einzugsbereich der Fördereinrichtung transportiert werden soll, dann wird die Transportwalze 23 um etwa 120° gegen den Uhrzeigersinn gedreht. Die Antriebe 28 der Transportwalzen 23 sind in der Figur 6 gut sichtbar. Sie können als Schrittmotor ausgeführt sein.

Durch eine Drehbewegung der Transportwalze 23 fördert bzw. transportiert die Auskehlung 25 eine Akkumulatorzelle 5 vom Ausgang des ersten Magazins 9 in den Einzugsbereich der Fördereinrichtung. Das gleich gilt entsprechend auch für den Transport einer Akkumulatorzelle 5 von dem Ausgang des zweiten Magazins 11 in den Einzugsbereich der Fördereinrichtung.

In der Figur 5 ist ein Horizontalschnitt durch die Transportwalzen 23 dargestellt aus dem sich die Funktionsweise dieser Fördereinrichtungen ergibt. In diesem Horizontalschnitt sind das erste Magazin 9 und das zweite Magazin 11 durch eine unterbrochene kreisförmige Linie dargestellt. In der Figur 5 ist die linke Transportwalze 23 so positioniert, dass sich eine Auskehlung 25 direkt unter dem ersten Magazin 9 und eine andere Auskehlung 25 und die in ihr befindliche Akkumulatorzelle 5 sich im Einzugsbereich der Fördereinrichtung befinden.

Bei dem in Figur 5 dargestellten Ausführungsbeispiel wird deutlich, dass drei Auskehlungen 25 am Umfang einer Transportwalze 23 ausgebildet sind. Ihr Abstand beträgt 120°.

Jeweils zwischen zwei Auskehlungen 25 ist an den Transportwalzen 23 eine kreisbogenförmige Vertiefung 24 ausgebildet. Ihr Abstand beträgt bei diesem Ausführungsbeispiel ebenfalls 120°.

Die Funktion der kreisbogenförmigen Vertiefungen 24 kann man anhand der in Figur 5 rechten Transportwalze 23 erkennen: Sie verhindert ein Herausfallen der Akkumulatorzelle 5 aus der Auskehlung 25 im Einzugsbereich der Fördereinrichtung. Bei dieser Ausführungsform befindet sich der Einzugsbereich zwischen den Drehachsen der Transportwalzen 23.

Außerhalb des Einzugsbereichs verhindert eine Führungswand 27 ein Herausfallen der Akkumulatorzelle 5 aus der Auskehlung 25. Die Führungswände 27 enden vor dem Einzugsbereich der Fördereinrichtung. Die Führungswände 27 sind konzentrisch zu den Transportwalzen 23 angeordnet. Im linken Teil der Figur 5 ist dies gut zu erkennen.

Die Drehpositionen der Transportwalzen 23 sind so aufeinander abgestimmt, dass eine Transportwalze 23 eine Akkumulatorzelle 5 vom Ausgang eines Magazins 9, 11 in den Einzugsbereich transportiert (in der Figur 5 ist das die linke Transportwalze 23). Die jeweils andere Transportwalze 23 wird dann in eine solche Drehposition gebracht, dass sich eine kreisbogenförmige Vertiefungen 24 im Einzugsbereich der Fördereinrichtung befindet (in der Figur 5 ist das die rechte Transportwalze 23). Die kreisbogenförmige Vertiefung 24 der rechten Transportwalze im Einzugsbereich der Fördereinrichtung stützt die von der linken Transortwalze zugeführte Akkumulatorzelle 5

In der Figur 5 sind verschiedene geometrische Relationen dargestellt, welche die Funktion dieses Ausführungsbeispiels unterstützen.

Ein Abstand zwischen den Drehachsen der Transportwalzen 23 ist mit "S" bezeichnet.

Ein Abstand zwischen der Drehachse einer Transportwalze 23 und dem tiefsten Punkt der kreisbogenförmigen Vertiefung 24 wird mit S_{VT} bezeichnet.

Der Durchmesser einer Akkumulatorzelle 5 wird mit "D_{A}" bezeichnet.

Ein Abstand zwischen der Drehachse einer Transportwalze 23 und dem tiefsten Punkt der Auskehlung 25 wird mit S_{AK} bezeichnet.

Der Radius R_{FW} der Führungswand 27 ist so bemessen, dass ausgehend von dem Abstand S_{AK} der Durchmesser D_{A} einer Akkumulatorzelle 5 hinzuaddiert wird. Es versteht sich von selbst, dass ein gewisses Spiel von beispielsweise 0,5 mm bis 2 mm vorgesehen ist, damit die Akkumulatorzelle 5 nicht zwischen der Auskehlung 25 und der Führungswand 27 eingeklemmt wird.

Der tiefste Punkt der kreisbogenförmigen Vertiefungen 24, die sich im Einzugsbereich der Fördereinrichtung befindet, liegt auf dem Radius R_{FW} der Führungswand 27, welche die andere Transportwalze 23 umgibt. In der Figur 5 sind diese geometrischen Relationen gut zu erkennen.

Die Akkumulatorzelle 5 im Einzugsbereich der Fördereinrichtung kann nun von einer Fördereinrichtung, beispielsweise mit zwei angetriebenen Förderrädern 17, wie beim ersten Ausführungsbeispiel, nach unten durch den Förderschacht zu dem nicht dargestellten Zellhalter transportiert werden.

Alternativ kann die Fördereinrichtung auch durch einen Stempel und einen Linearantrieb (beides nicht dargestellt) realisiert werden. Beide sind oberhalb der Akkumulatorzelle 5 und damit auch oberhalb der Zeichnungsebene angeordnet. Wenn die Akkumulatorzelle 5 aus dem Einzugsbereich nach unten bewegt werden soll, dann treibt der Linearantrieb den Stempel nach unten, der wiederum die Akkumulatorzelle 5 nach unten durch den Förderschacht in den ihr zugewiesenen Steckplatz des Zellhalters drückt.

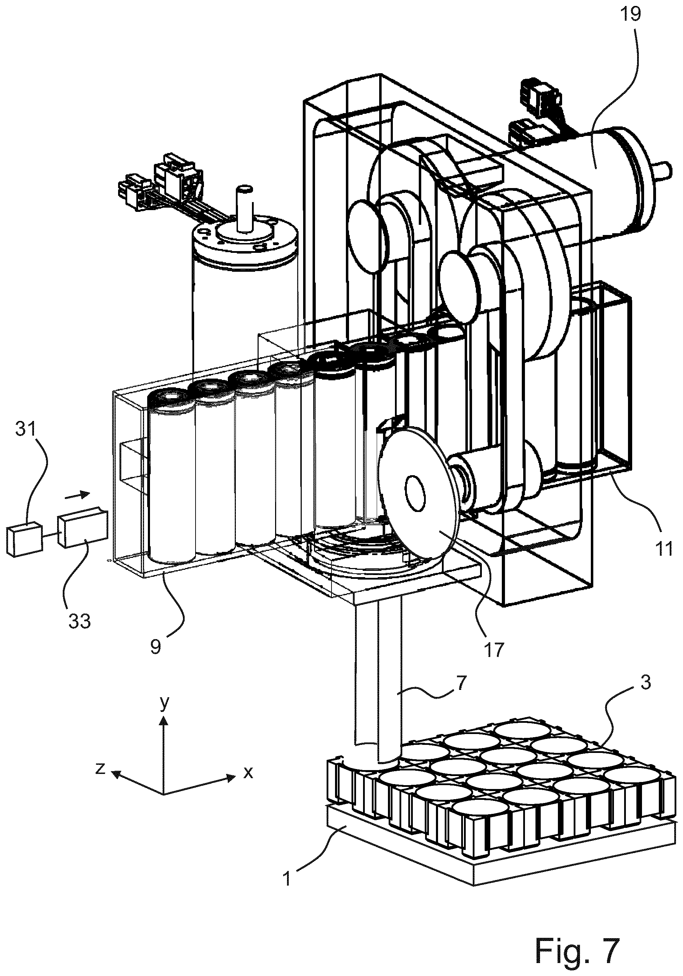

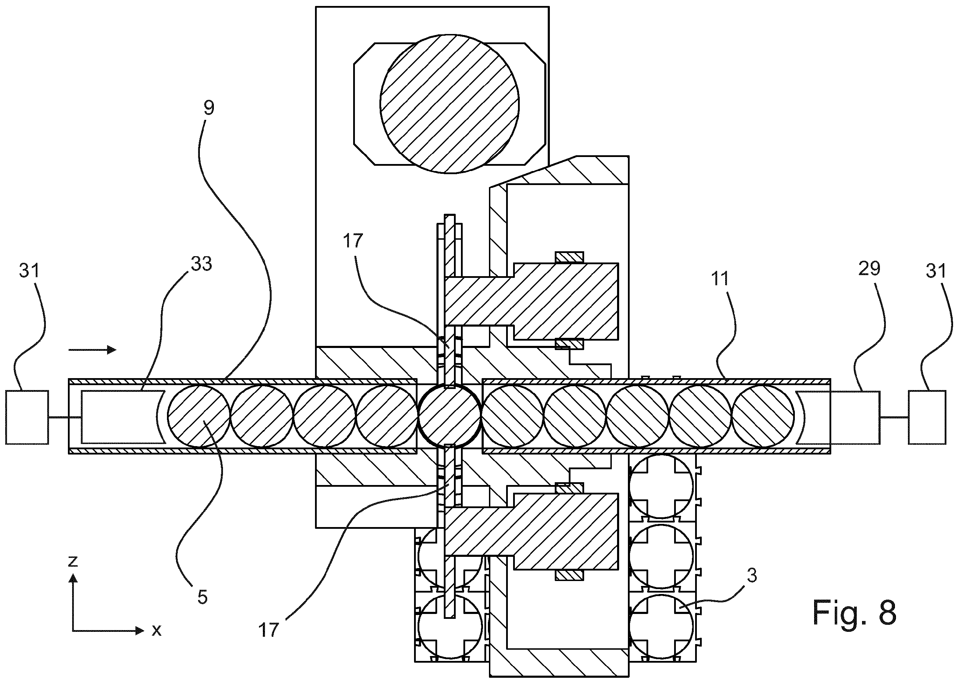

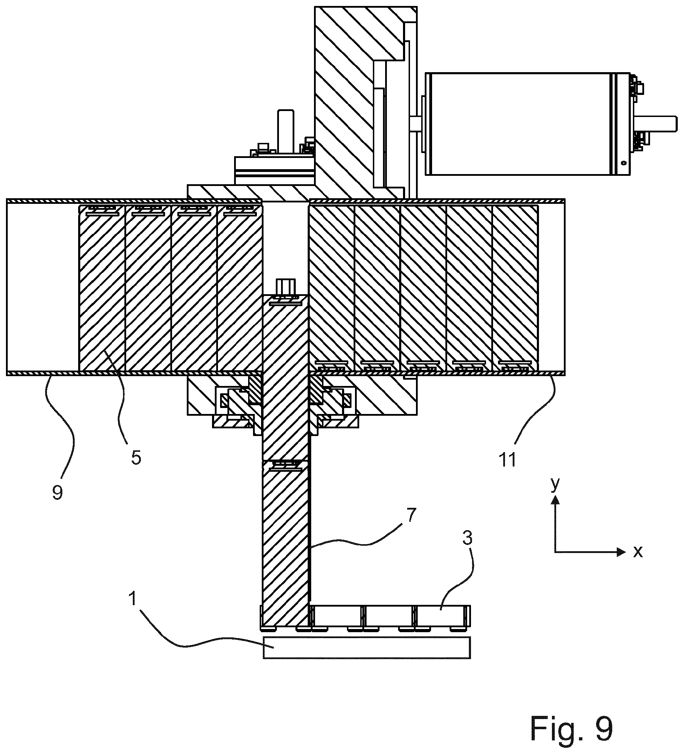

Anhand der Figuren 7, 8 und 9 wird ein weiteres Ausführungsbeispiel einer erfindungsgemäßen Vorrichtung dargestellt. In der Figur 7 ist die Halbschale 7 besonders gut zu erkennen, weil sie ohne Akkumulatorzelle dargestellt ist. Die Fördereinrichtung mit einem Förderrad und einem Widerlager auf der "hinteren" Seite der Vorrichtung ist gleich ausgebildet wie bei dem ersten Ausführungsbeispiel.

Ein Unterschied besteht in der Ausgestaltung des ersten Magazins 9 und des zweiten Magazins 11 sowie der Zuführeinrichtungen. Die Magazine 9 und 11 sind als Schlauch oder Rechteckrohr ausgebildet, die sich in horizontaler Richtung erstrecken. Das erste Magazin 9 erstreckt sich links des Einzugsbereichs der Fördereinrichtung. Das zweite Magazin 11 ist rechts des Einzugsbereichs angeordnet. Die Abmessungen der als Rechteckrohr ausgebildeten Magazine 9 und 11 sind auf die Länge und den Durchmesser der Akkumulatorzellen abgestimmt. Das bedeutet, dass die Akkumulatorzellen senkrecht nebeneinander in den Magazinen 9 bzw. 11 zwischengelagert werden können. In dem ersten Magazin 9 sind die Pluspole der Akkumulatorzellen 5 oben angeordnet. In dem zweiten Magazin 11 sind die Pluspole der Akkumulatorzellen 5 unten angeordnet. Das bedeutet, dass auch hier alle Akkumulatorzellen 5 in einem Magazin gleich ausgerichtet sind (polorientierte Befüllung). Die Akkumulatorzellen des ersten Magazins und des zweiten Magazins sind entgegengesetzt ausgerichtet.

Die Zuführeinrichtungen sind in diesem Ausführungsbeispiel nicht d bzw. nur stark vereinfacht dargestellt. Sie können beispielsweise durch einen Stempel 33 und einen Linearantrieb 31, der sich seitlich der Magazine 9 bzw. 11 befindet, realisiert werden. Im linken Teil der Figur 7 ist eine erste Zuführeinrichtung schematisch und stark vereinfacht dargestellt. Der Stempel hat das Bezugszeichen 33 und der Linearantrieb das Bezugszeichen 31.

## Patentansprüche

1. Vorrichtung zum Bestücken von Zellhaltern (3) mit Akkumulatorzellen (5) umfassend ein erstes Magazin (9) und ein zweites Magazin (11) für Akkumulatorzellen (5), eine erste Zuführeinrichtung und eine zweite Zuführeinrichtung und eine Fördereinrichtung zum Stecken einer Akkumulatorzelle (5) in einen Steckplatz eines Zellhalters (3), wobei die erste Zuführeinrichtung so eingerichtet ist, dass sie der Fördereinrichtung eine Akkumulatorzelle (5) aus dem ersten Magazin (9) zuführen kann, und wobei die zweite Zuführeinrichtung so eingerichtet ist, dass sie der Fördereinrichtung eine Akkumulatorzelle (5) aus dem zweiten Magazin (11) zuführen kann.

2. Vorrichtung nach Anspruch 1, **dadurch gekennzeichnet, dass** die erste Zuführeinrichtung einen Schieber (13) sowie einen steuerbaren Linearantrieb (15) umfasst, und dass der Schieber (13) eine Akkumulatorzelle (5), die sich im Ausgang des ersten Magazins (9) befindet, in einen Einzugsbereich der Fördereinrichtung bewegt, wenn der Linearantrieb (15) entsprechend angesteuert wird, und dass die zweite Zuführeinrichtung einen Schieber sowie einen steuerbaren Linearantrieb für den Schieber umfasst, und dass der Schieber eine Akkumulatorzelle (5), die sich im Ausgang des zweiten Magazins (11) befindet, in den Einzugsbereich der Fördereinrichtung bewegt, wenn der Linearantrieb entsprechend angesteuert wird.

3. Vorrichtung nach Anspruch 1, **dadurch gekennzeichnet, dass** die erste Zuführeinrichtung eine drehbar gelagerte Transportwalze (23) mit mindestens einer Auskehlung (25) zur Aufnahme einer Akkumulatorzelle (5) umfasst, dass eine Längsachse der Auskehlung parallel zu einer Drehachse der Transportwalze (23) verläuft, dass die mindestens eine Auskehlung (25) mittels des Drehantriebs von einem Ausgang des ersten Magazins (9) in den Einzugsbereich der Fördereinrichtung bewegbar ist, dass die zweite Zuführeinrichtung eine drehbar gelagerte Transportwalze (23) mit mindestens einer Auskehlung (25) zur Aufnahme einer Akkumulatorzelle (5) umfasst, dass eine Längsachse der Auskehlung (25) parallel zu einer Drehachse der Transportwalze (23) verläuft, und dass die mindestens eine Auskehlung (25) mittels des Drehantriebs von einem Ausgang des zweiten Magazins (11) in den Einzugsbereich der Fördereinrichtung bewegbar ist.

4. Vorrichtung nach Anspruch 3, **dadurch gekennzeichnet, dass** die Transportwalzen (23) mindestens eine Vertiefung (24) umfassen, dass eine Längsachse der Vertiefung (24) parallel zu einer Drehachse der Transportwalze (23) verläuft, und dass die mindestens eine Vertiefung (24) zwischen mittels des Drehantriebs in den Einzugsbereich der Fördereinrichtung bewegbar ist.

5. Vorrichtung nach Anspruch 3 oder 4, **dadurch gekennzeichnet, dass** ein Abstand (S) der Drehachsen beider Transportwalzen (23) gleich dem Abstand (S_{AK}) zwischen der Drehachse einer Transportwalze (23) und dem tiefsten Punkt (S_{AK}) der Auskehlung (25) plus dem Durchmesser (D_{A}) einer Akkumulatorzelle (5) plus dem Abstand (S_{VT}) zwischen der Drehachse einer Transportwalze (23) und dem tiefsten Punkt (S_{VT}) der Vertiefung (24) ist.

6. Vorrichtung nach Anspruch 3, 4 oder 5, **dadurch gekennzeichnet, dass** die Transportwalzen (23) jeweils von einer Führungswand (27) umgeben ist, dass die Führungswände (27) konzentrisch zu den Drehachsen der Transportwalzen (23) angeordnet sind.

7. Vorrichtung nach Anspruch 6, **dadurch gekennzeichnet, dass** ein Abstand (R_{FW}) zwischen der Führungswand (27) und der Drehachse einer Transportwalze (23) gleich dem Abstand (S_{AK}) zwischen dem tiefsten Punkt einer Auskehlung (25) plus dem Durchmesser (D_{A}) einer Akkumulatorzelle (5) ist.

8. Vorrichtung nach einem der vorhergehenden Ansprüche, **dadurch gekennzeichnet, dass** die Fördereinrichtung mindestens ein drehantreibbares Förderrad (17), einen Drehantrieb (19) sowie einen optionalen Förderschacht umfasst, dass das Förderrad (17) in einen Einzugsbereich der Fördereinrichtung ragt, dass dem drehantreibbaren Förderrad (17) gegenüberliegend ein Widerlager für eine im Einzugsbereich befindliche Akkumulatorzelle (5) vorgesehen ist.

9. Vorrichtung nach Anspruch 8, **dadurch gekennzeichnet, dass** das Widerlager als Rad oder Rippe ausgebildet ist, und dass ein Abstand zwischen dem Förderrad (17) und dem Widerlager etwa dem Durchmesser (D_{A}) einer Akkumulatorzelle (5) entspricht.

10. Vorrichtung nach einem der Ansprüche 1 bis 7, **dadurch gekennzeichnet, dass** die Fördereinrichtung einen Stempel und einen Linearantrieb umfasst, dass der Stempel oberhalb des Einzugsbereichs der Fördereinrichtung angeordnet ist, und dass der Stempel eine im Einzugsbereich befindliche Akkumulatorzelle (5) in Richtung eines Zellhalters (3) befördert.

11. Vorrichtung nach einem der vorhergehenden Ansprüche, **dadurch gekennzeichnet, dass** die Fördereinrichtung eine drehbare Halbschale (7) umfasst, welche die aus dem die aus dem Einzugsbereich geförderten Akkumulatorzellen (5) gegen Kippen sichert.

12. Vorrichtung nach Anspruch 11, **dadurch gekennzeichnet, dass** die Fördereinrichtung einen steuerbaren Drehantrieb (21) für die Halbschale (7) umfasst.

13. Vorrichtung nach einem der vorhergehenden Ansprüche, **dadurch gekennzeichnet, dass** sie einen Schlitten (1) aufweist, der einen zu bestückenden Zellhalter (3) trägt, und dass der Schlitten (1) in Förderrichtung hinter der Halbschale (7) angeordnet ist.

14. Vorrichtung nach Anspruch 13, **dadurch gekennzeichnet, dass** sie Führungen und Antriebe aufweist, sodass der Schlitten (1) und die Fördereinrichtung oder ein Förderschacht relativ zueinander verfahrbar in mindestens zwei Raumesrichtungen sind.

15. Vorrichtung nach einem der vorhergehenden Ansprüche, **dadurch gekennzeichnet, dass** die Linearantriebe und/oder Drehantriebe der Zuführeinrichtungen, der Fördereinrichtung, der drehbaren Halbschale (7) und/oder des Schlittens (1) pneumatische, elektromechanische oder hydraulische Antriebe sind.

16. Vorrichtung nach einem der vorhergehenden Ansprüche, **dadurch gekennzeichnet, dass** das erste Magazin (9) und/oder das zweite Magazin (9) als Rohr oder Schlauch ausgebildet ist, dessen Innendurchmesser (Dᵢ) etwas größer als der Außendurchmesser der Akkumulatorzellen (5) ist.

17. Vorrichtung nach einem der Ansprüche 1 bis 15,
**dadurch gekennzeichnet, dass** das erste Magazin (9) und/oder das zweite Magazin (11) als Rohr oder Schlauch mit einem rechteckigen Querschnitt ausgebildet ist, dass eine Breite (Bᵢ) des Schlauchs etwas größer als der Außendurchmesser (D_{A}) der Akkumulatorzellen (5) ist, und dass eine Höhe (Hᵢ) des Schlauchs etwas größer als die Länge (L) der Akkumulatorzellen (5) ist.

18. Verfahren zum Bestücken eines Zellhalters (3) mit Akkumulatorzellen (5) mittels einer Vorrichtung zum Bestücken eines Zellhalters umfassend ein erstes Magazin (9) und ein zweites Magazin (11) für Akkumulatorzellen (5), eine erste Zuführeinrichtung und eine zweite Zuführeinrichtung, und eine Fördereinrichtung zum Stecken einer Akkumulatorzelle (5) in einen Steckplatz eines Zellhalters (3), und wobei die Fördereinrichtung eine in dem Einzugsbereich befindliche Akkumulatorzelle (5) in einen Steckplatz des Zellhalters (3) fördern kann, wobei die erste Zuführeinrichtung so eingerichtet ist, dass sie der Fördereinrichtung eine Akkumulatorzelle (5) aus dem ersten Magazin (9) zuführen kann, und wobei die zweite Zuführeinrichtung so eingerichtet ist, dass sie der Fördereinrichtung eine Akkumulatorzelle (5) aus dem zweiten Magazin (11) zuführen kann, umfassend die Schritte:
- Zuführen einer Akkumulatorzelle (5) von einem Ausgang des ersten Magazins (9) oder des zweiten Magazins (11) in einen Einzugsbereich der Fördereinrichtung,
- Positionieren des Zellhalters (3) so dass - in Förderrichtung gesehen - hinter dem Einzugsbereich bzw. einem optionalen Förderschacht ein freier Steckplatz vorhanden ist, und anschließend
- Fördern der in dem Einzugsbereich der Fördereinrichtung befindlichen Akkumulatorzelle (5) in den Zellhalter (3).

19. Verfahren nach Anspruch 18, **dadurch gekennzeichnet, dass** die in dem ersten Magazin (9) und dem zweiten Magazin (11) befindlichen Akkumulatorzellen (5) verschieden ausgerichtet sind, und dass entsprechend der in dem zu bestückenden Steckplatz geforderten Polarität der Akkumulatorzelle (5) die erst oder die zweite Zuführeinrichtung betätigt wird.

20. Verfahren nach Anspruch 18 oder 19, **dadurch gekennzeichnet, dass** die Schritte "Zuführen einer Akkumulatorzelle (5)" und "Positionieren des Zellhalters (3)" simultan oder hintereinander ausgeführt werden.

## Claims

1. Apparatus for loading cell holders (3) with battery cells (5), comprising a first magazine (9) and a second magazine (11) for battery cells (5), a first supply device and a second supply device, and a conveying device for inserting a battery cell (5) into a slot of a cell holder (3), wherein the first supply device is designed such that it can supply a battery cell (5) from the first magazine (9) to the conveying device, and wherein the second supply device is designed such that it can supply a battery cell (5) from the second magazine (11) to the conveying device.

2. Apparatus according to claim 1, **characterized in that** the first supply device comprises a slider (13) and a controllable linear drive (15), and **in that** the slider (13) moves a battery cell (5) located in the exit of the first magazine (9) into an entry region of the conveying device when the linear drive (15) is controlled accordingly, and **in that** the second supply device comprises a slider and a controllable linear drive for the slider, and **in that** the slider moves a battery cell (5) located in the exit of the second magazine (11) into the entry region of the conveying device when the linear drive is controlled accordingly.

3. Apparatus according to claim 1, **characterized in that** the first supply device comprises a rotatably mounted transport roller (23) having at least one channel (25) for receiving a battery cell (5), **in that** a longitudinal axis of the channel runs in parallel with a rotational axis of the transport roller (23), **in that** the at least one channel (25) can be moved from an exit of the first magazine (9) into the entry region of the conveying device by means of the rotary drive, **in that** the second supply device comprises a rotatably mounted transport roller (23) having at least one channel (25) for receiving a battery cell (5), **in that** a longitudinal axis of the channel (25) runs in parallel with a rotational axis of the transport roller (23), and **in that** the at least one channel (25) can be moved from an exit of the second magazine (11) into the entry region of the conveying device by means of the rotary drive.

4. Apparatus according to claim 3, **characterized in that** the transport rollers (23) comprise at least one depression (24), **in that** a longitudinal axis of the depression (24) runs in parallel with a rotational axis of the transport roller (23), and **in that** the at least one depression (24) can be moved between into the entry region of the conveying device by means of the rotary drive.

5. Apparatus according to claim 3 or claim 4, **characterized in that** a distance (S) between the rotational axes of the two transport rollers (23) is equal to the distance (S_{AK}) between the rotational axis of a transport roller (23) and the lowest point (S_{AK}) of the channel (25) plus the diameter (D_{A}) of a battery cell (5), plus the distance (S_{VT}) between the rotational axis of a transport roller (23) and the lowest point (S_{VT}) of the depression (24).

6. Apparatus according to claim 3, claim 4 or claim 5, **characterized in that** the transport rollers (23) are each surrounded by a guide wall (27), and **in that** the guide walls (27) are arranged concentrically to the rotational axes of the transport rollers (23).

7. Apparatus according to claim 6, **characterized in that** a distance (R_{FW}) between the guide wall (27) and the rotational axis of a transport roller (23) is equal to the distance (S_{AK}) between the lowest point of a channel (25) plus the diameter (D_{A}) of a battery cell (5).

8. Apparatus according to any of the preceding claims, **characterized in that** the conveying device comprises at least one rotatably drivable conveying wheel (17), a rotary drive (19) and an optional conveying shaft, **in that** the conveying wheel (17) projects into an entry region of the conveying device, and **in that** an abutment for a battery cell (5) located in the entry region is provided opposite the rotatably drivable conveying wheel (17).

9. Apparatus according to claim 8, **characterized in that** the abutment is designed as a wheel or rib, and **in that** a distance between the conveying wheel (17) and the abutment corresponds approximately to the diameter (D_{A}) of a battery cell (5).

10. Apparatus according to any of claims 1 to 7, **characterized in that** the conveying device comprises a plunger and a linear drive, **in that** the plunger is arranged above the entry region of the conveying device, and **in that** the plunger conveys a battery cell (5) located in the entry region in the direction of a cell holder (3).

11. Apparatus according to any of the preceding claims, **characterized in that** the conveying device comprises a rotatable half-shell (7) which secures the battery cells (5) conveyed from from the entry region against tipping.

12. Apparatus according to claim 11, **characterized in that** the conveying device comprises a controllable rotary drive (21) for the half-shell (7).

13. Apparatus according to any of the preceding claims, **characterized in that** the apparatus has a carriage (1) which carries a cell holder (3) to be loaded, and **in that** the carriage (1) is arranged behind the half-shell (7) in the conveying direction.

14. Apparatus according to claim 13, **characterized in that** the apparatus has guides and drives, so that the carriage (1) and the conveying device or a conveying shaft can be moved relative to one another in at least two spatial directions.

15. Apparatus according to any of the preceding claims, **characterized in that** the linear drives and/or rotary drives of the supply devices, the conveying device, the rotatable half-shell (7) and/or of the carriage (1) are pneumatic, electromechanical or hydraulic drives.

16. Apparatus according to any of the preceding claims, **characterized in that** the first magazine (9) and/or the second magazine (9) is designed as a tube or hose, the inner diameter (Dᵢ) of which is slightly greater than the outer diameter of the battery cells (5).

17. Apparatus according to any of claims 1 to 15, **characterized in that** the first magazine (9) and/or the second magazine (11) is designed as a tube or hose which has a rectangular cross section, **in that** a width (Bᵢ) of the hose is slightly greater than the outer diameter (D_{A}) of the battery cells (5), and **in that** a height (Hᵢ) of the hose is slightly greater than the length (L) of the battery cells (5).

18. Method for loading a cell holder (3) with battery cells (5) by means of an apparatus for loading a cell holder, comprising a first magazine (9) and a second magazine (11) for battery cells (5), a first supply device and a second supply device, and a conveying device for inserting a battery cell (5) into a slot of a cell holder (3), and wherein the conveying device can convey a battery cell (5) located in the entry region into a slot of the cell holder (3), wherein the first supply device is designed such that it can supply a battery cell (5) from the first magazine (9) to the conveying device, and wherein the second supply device is designed such that it can supply a battery cell (5) from the second magazine (11) to the conveying device, comprising the steps of:
- supplying a battery cell (5) from an exit of the first magazine (9) or of the second magazine (11) into an entry region of the conveying device,
- positioning the cell holder (3) such that, when viewed in the conveying direction, a free slot is present behind the entry region or an optional conveying shaft, and subsequently
- conveying the battery cell (5) located in the entry region of the conveying device into the cell holder (3).

19. Method according to claim 18, **characterized in that** the battery cells (5) located in the first magazine (9) and in the second magazine (11) are aligned differently, and **in that** the first or the second supply device is operated according to the polarity of the battery cell (5) required in the slot to be loaded.

20. Method according to claim 18 or claim 19, **characterized in that** the steps "supplying a battery cell (5)" and "positioning the cell holder (3)" are carried out simultaneously or in succession.

## Revendications

1. Dispositif pour équiper des porte-cellules (3) avec des cellules d'accumulateur (5), comprenant un premier magasin (9) et un deuxième magasin (11) pour des cellules d'accumulateur (5), un premier système d'amenée et un deuxième système d'amenée et un système de convoyage pour l'enfichage d'une cellule d'accumulateur (5) dans un emplacement d'enfichage d'un porte-cellule (3), dans lequel le premier dispositif d'amenée est mis au point de manière à pouvoir amener au système de convoyage une cellule d'accumulateur (5) provenant du premier magasin (9), et dans lequel le deuxième système d'amenée est mis au point de manière à pouvoir amener au système de convoyage une cellule d'accumulateur (5) provenant du deuxième magasin (11).

2. Dispositif selon la revendication 1, **caractérisé en ce que** le premier système d'amenée comprend un coulisseau (13) ainsi qu'un actionneur linéaire (15) pouvant être commandé, et que le coulisseau (13) déplace une cellule d'accumulateur (5), qui se trouve à la sortie du premier magasin (9), dans une zone d'admission du système de convoyage lorsque l'entraînement linéaire (15) est piloté de manière correspondante, et que le deuxième système d'amenée comprend un coulisseau ainsi qu'un entraînement linéaire pouvant être commandé pour le coulisseau, et que le coulisseau déplace une cellule d'accumulateur (5), qui se trouve à la sortie du deuxième magasin (11), dans la zone d'admission du système de convoyage lorsque l'entraînement linéaire est piloté de manière correspondante.

3. Dispositif selon la revendication 1, **caractérisé en ce que** le premier système d'amenée comprend un rouleau de transport (23) monté de manière à pouvoir tourner avec au moins une gorge (25) pour recevoir une cellule d'accumulateur (5), qu'un axe longitudinal de la gorge s'étend parallèlement à un axe de rotation du rouleau de transport (23), que l'au moins une gorge (25) peut être déplacée au moyen de l'entraînement rotatif d'une sortie du premier magasin (9) dans la zone d'admission du système de convoyage, que le deuxième système d'amenée comprend un rouleau de transport (23) monté de manière à pouvoir tourner avec au moins une gorge (25) pour recevoir une cellule d'accumulateur (5), qu'un axe longitudinal de la gorge (25) s'étend parallèlement à un axe de rotation du rouleau de transport (23), et que l'au moins une gorge (25) peut être déplacée au moyen de l'entraînement rotatif depuis une sortie du deuxième magasin (11) dans la zone d'admission du système de convoyage.

4. Dispositif selon la revendication 3, **caractérisé en ce que** les rouleaux de transport (23) comprennent au moins un renfoncement (24), qu'un axe longitudinal du renfoncement (24) s'étend parallèlement à un axe de rotation du rouleau de transport (23), et que l'au moins un renfoncement (24) peut être déplacé au moyen de l'entraînement rotatif dans la zone d'admission du système de convoyage.

5. Dispositif selon la revendication 3 ou 4, **caractérisé en ce qu'**une distance (S) des axes de rotation des deux rouleaux de transport (23) est égale à la distance (S_{AK}) entre l'axe de rotation d'un rouleau de transport (23) et le point le plus bas (S_{AK}) de la gorge (25) plus le diamètre (D_{A}) d'une cellule d'accumulateur (5) plus la distance (S_{VT}) entre l'axe de rotation d'un rouleau de transport (23) et le point le plus bas (S_{VT}) du renfoncement (24).

6. Dispositif selon la revendication 3, 4 ou 5, **caractérisé en ce que** les rouleaux de transport (23) sont chacun entourés d'une paroi de guidage (27), que les parois de guidage (27) sont disposées de manière concentrique par rapport aux axes de rotation des rouleaux de transport (23).

7. Dispositif selon la revendication 6, **caractérisé en ce qu'**une distance (R_{FW}) entre la paroi de guidage (27) et l'axe de rotation d'un rouleau de transport (23) est égale à la distance (S_{AK}) entre le point le plus bas d'une gorge (25) plus le diamètre (D_{A}) d'une cellule d'accumulateur (5).

8. Dispositif selon l'une quelconque des revendications précédentes, **caractérisé en ce que** le système de convoyage comprend au moins une roue de convoyage pouvant être entraînée en rotation (17), un entraînement rotatif (19) ainsi qu'un puits de convoyage optionnel, que la roue de convoyage (17) dépasse dans une zone d'admission du système de convoyage, qu'une butée pour une cellule d'accumulateur (5) se trouvant dans la zone d'admission est prévue en face de la roue de convoyage pouvant être entraînée en rotation (17).

9. Dispositif selon la revendication 8, **caractérisé en ce que** la butée est réalisée en tant qu'une roue ou une nervure, et qu'une distance entre la roue de convoyage (17) et la butée correspond environ au diamètre (D_{A}) d'une cellule d'accumulateur (5).

10. Dispositif selon l'une quelconque des revendications 1 à 7, **caractérisé en ce que** le système de convoyage comprend un piston et un entraînement linéaire, que le piston est disposé au-dessus de la zone d'admission du système de convoyage, et que le piston transporte une cellule d'accumulateur (5) se trouvant dans la zone d'admission en direction d'un porte-cellule (3).

11. Dispositif selon l'une quelconque des revendications précédentes, **caractérisé en ce que** le système de convoyage comprend une demi-coque (7) pouvant tourner qui bloque les cellules d'accumulateur (5) transportées hors de la zone d'admission pour les empêcher de basculer.

12. Dispositif selon la revendication 11, **caractérisé en ce que** le système de convoyage comprend un entraînement rotatif pouvant être piloté (21) pour la demi-coque (7).

13. Dispositif selon l'une quelconque des revendications précédentes, **caractérisé en ce qu'**il présente un chariot (1) qui porte un porte-cellule (3) à équiper, et que le chariot (1) est disposé derrière la demi-coque (7) dans la direction de convoyage.

14. Dispositif selon la revendication 13, **caractérisé en ce qu'**il présente des guidages et des entraînements si bien que le chariot (1) et le système de convoyage ou un puits de convoyage peuvent être déplacés les uns par rapport aux autres dans au moins deux directions spatiales.

15. Dispositif selon l'une quelconque des revendications précédentes, **caractérisé en ce que** les entraînements linéaires et/ou rotatifs des systèmes d'amenée, du système de convoyage, de la demi-coque (7) pouvant tourner et/ou du chariot (1) sont des entraînements pneumatiques, électromécaniques ou hydrauliques.

16. Dispositif selon l'une quelconque des revendications précédentes, **caractérisé en ce que** le premier magasin (9) et/ou le deuxième magasin (9) sont réalisés sous forme de tube ou de tuyau flexible, dont le diamètre intérieur (Dᵢ) est légèrement supérieur au diamètre extérieur des cellules d'accumulateur (5).

17. Dispositif selon l'une quelconque des revendications 1 à 15, **caractérisé en ce que** le premier magasin (9) et/ou le deuxième magasin (11) sont réalisés en tant que tube ou tuyau flexible avec une section transversale rectangulaire, qu'une largeur (Bᵢ) du tuyau flexible est légèrement supérieure au diamètre extérieur (D_{A}) des cellules d'accumulateur (5), et qu'une hauteur (Hᵢ) du tuyau flexible est légèrement supérieure à la longueur (L) des cellules d'accumulateur (5).

18. Procédé pour équiper un porte-cellule (3) avec des cellules d'accumulateur (5) au moyen d'un dispositif d'équipement d'un porte-cellule comprenant un premier magasin (9) et un deuxième magasin (11) pour des cellules d'accumulateur (5), un premier système d'amenée et un deuxième système d'amenée, et un système de convoyage pour l'enfichage d'une cellule d'accumulateur (5) dans un emplacement d'enfichage d'un porte-cellule (3), et dans lequel le système de convoyage peut convoyer une cellule d'accumulateur (5) se trouvant dans la zone d'admission dans un emplacement d'enfichage du porte-cellule (3), dans lequel le premier système d'amenée est mis au point de manière à amener au système de convoyage une cellule d'accumulateur (5) provenant du premier magasin (9), et le deuxième système d'amenée est mis au point de manière à amener au système de convoyage une cellule d'accumulateur (5) provenant du deuxième magasin (11), comprenant les étapes:
- d'amenée d'une cellule d'accumulateur (5) depuis une sortie du premier magasin (9) ou du deuxième magasin (11) dans une zone d'admission du système de convoyage,
- de positionnement du porte-cellule (3) de telle sorte que - vu dans la direction de convoyage - un emplacement d'enfichage libre est présent derrière la zone d'admission ou d'un puits de convoyage en option, puis
- de convoyage de la cellule d'accumulateur (5) se trouvant dans la zone d'admission du système de convoyage dans le porte-cellule (3).

19. Procédé selon la revendication 18, **caractérisé en ce que** les cellules d'accumulateur (5) se trouvant dans le premier magasin (9) et le deuxième magasin (11) sont orientées différemment, et que le premier ou le deuxième système d'amenée est actionné en fonction de la polarité de la cellule d'accumulateur (5) requise dans l'emplacement d'enfichage à équiper.

20. Procédé selon la revendication 18 ou 19, **caractérisé en ce que** les étapes «amenée d'une cellule d'accumulateur (5)» et «positionnement du porte-cellule (3)» sont exécutées simultanément ou l'une après l'autre.
